# EUROPEAN PATENT APPLICATION

(11) **EP 4 711 875 A1**
(43) Date of publication of application: **18.03.2026**
(21) Application number: 23945568.6
(22) Date of filing: 09.09.2023
(51) Int. Cl.: G05D 1/00, G01C 19/00

(54) **TROLLEY CONTROL METHOD BASED ON GYROSCOPES AND TRACTION-ASSISTED TROLLEY**

(30) Priority: 19.07.2023 CN 202310888759
(71) Applicant: He, Zhuangxian, Shenzhen, Guangdong 518000 (CN)
(72) Inventor: He, Zhuangxian, Shenzhen, Guangdong 518000 (CN)
(74) Representative: Metida
(86) International application number: PCT/CN2023/117890
(87) International publication number: WO 2025/015686

(57) **Abstract**

This disclosure pertains to a gyroscope-based control method for a trolley and a traction-assisted trolley. By receiving and processing the angle θA between the trolley and the horizontal plane, as well as the angle θB between the control handle and the horizontal plane, the method calculates the angle θC between the control handle and the driving surface. Based on angle θC, the trolley is controlled to perform a first preset operation, enabling the trolley to execute the first preset operation according to the position of the control handle, regardless of whether it is traveling on a horizontal or inclined surface. This achieves the objective of driving and controlling the trolley's movement based on the position of the control handle. Additionally, the disclosure controls the trolley to perform a second preset operation by receiving and determining the swing angle θD of the control handle in the vertical plane perpendicular to the trolley's direction of travel, thereby controlling the trolley's steering direction. This method accurately controls the trolley's movement on different surfaces by acquiring and processing the angle between the trolley and the horizontal plane, as well as the angle between the control handle and the horizontal plane, to determine the angle between the control handle and the actual driving surface, and subsequently controlling the trolley based on the position of the control handle.

## Description

### TECHNICAL FIELD

This disclosure pertains to the field of intelligent control technologies, specifically relating to a gyroscope-based control method for a trolley and a traction-assisted trolley.

### BACKGROUND

A traction-assisted trolley comprises a trolley body and a control handle mounted thereon. The trolley employs a control center and a drive mechanism to facilitate movement, with the control center utilizing gyroscopic data from the control handle to govern motion, braking, and other operational functions. However, the gyroscope on the control handle only measures its angle relative to the horizontal plane. Consequently, when the trolley travels on a level surface, this angle corresponds accurately to the control handle's angle relative to the actual travel surface, enabling correct control by the control center. Yet, on inclined surfaces, the gyroscope's angle relative to the horizontal does not equate to the control handle's angle relative to the actual travel surface, leading to discrepancies in the data received by the control center and, consequently, incorrect control of the trolley's movement.

### SUMMARY

In view of the aforementioned issues, this disclosure provides a gyroscope-based control method for trolleys to address the challenge of accurately controlling trolley movement based on the control handle's position when the trolley is on an inclined surface.

In order to achieve one or more of the aforementioned objectives, or other objectives, this disclosure proposes the following solution.

A gyroscope-based control method for trolleys is provided, the method comprises:
acquiring the angle θ_{A} between the trolley and the horizontal plane using a first gyroscope fixed to the trolley, and obtaining the angle θ_{B} between the control handle and the horizontal plane, as well as the swing angle θ_{D} of the control handle in the plane perpendicular to the trolley's direction of travel, using a second gyroscope fixed to the control handle;
processing angles θ_{A} and θ_{B} to determine the angle θ_{C} between the control handle and the travel surface; and
controlling the trolley to perform a first preset operation based on angle θ_{C} and a second preset operation based on swing angle θ_{D}.

Further, angle θ_{C} is the sum of angles θ_{A} and θ_{B}, with value ranges: -90° < θ_{A} < 90°, 0° ≤ θ_{B} ≤ 90°, and 0° ≤ θ_{C} ≤ 90°.

Further, the first preset operation comprises parking brake, travel operation, and braking operation:
when angle θ_{C} equals 90°, the trolley is controlled to engage the parking brake;
when angle θ_{C} is greater than or equal to 30° and less than 90°, the trolley is controlled to travel;
when angle θ_{C} is less than 30°, the trolley is controlled to brake.

Further, the swing angle θ_{D} has a value range of -90° < θ_{D} < 90°; the second preset operation comprises maintaining straight travel, turning left, and turning right:
when swing angle θ_{D} equals 0°, the trolley is controlled to maintain straight travel;
when swing angle θ_{D} is less than 0°, the trolley is controlled to turn left;
when swing angle θ_{D} is greater than 0°, the trolley is controlled to turn right.

A traction-assisted trolley is provided, which comprises:
a first gyroscope configured to acquire the angle θ_{A} between the trolley and the horizontal plane;
a second gyroscope configured to acquire the angle θ_{B} between the control handle and the horizontal plane, as well as the swing angle θ_{D} of the control handle in the plane perpendicular to the trolley's direction of travel;
a control module configured to receive and process angles θ_{A} and θ_{B} to determine the angle θ_{C} between the control handle and the travel surface, and to control the trolley to perform a first preset operation based on angle θ_{C} and a second preset operation based on swing angle θ_{D}.

Further, angle θ_{C} is the sum of angles θ_{A} and θ_{B}, with value ranges: -90° < θ_{A} < 90°, 0° ≤ θ_{B} ≤ 90°, and 0° ≤ θ_{C} ≤ 90°.

Further, the first preset operation comprises parking brake, travel operation, and braking operation:
when the control module detects that angle θ_{C} equals 90°, the trolley is controlled to engage the parking brake;
when the control module detects that angle θ_{C} is greater than or equal to 30° and less than 90°, the trolley is controlled to travel;
when the control module detects that angle θ_{C} is less than 30°, the trolley is controlled to brake.

Further, the swing angle θ_{D} has a value range of -90° < θ_{D} < 90°; the second preset operation comprises maintaining straight travel, turning left, and turning right:
when the control module detects that swing angle θ_{D} equals 0°, the trolley is controlled to maintain straight travel;
when the control module detects that swing angle θ_{D} is less than 0°, the trolley is controlled to turn left;
when the control module detects that swing angle θ_{D} is greater than 0°, the trolley is controlled to turn right.

A mobile terminal is provided, which comprises a memory and a processor, wherein the memory stores a computer program, and when executed by the processor, implements the steps of the aforementioned method.

A computer storage medium is provided, on which a computer program is stored, and when executed by a processor, implements the steps of the aforementioned method.

Advantages of making the disclosure is shown below.

By adopting the method provided in this disclosure, the angles θ_{A} and θ_{B} between the trolley and the horizontal plane, and the control handle and the horizontal plane, respectively, are received and processed to determine angle θ_{C} between the control handle and the travel surface. Based on angle θ_{C}, the trolley is controlled to perform a first preset operation, enabling accurate control of the trolley's movement according to the control handle's position, regardless of whether the trolley is on a level or inclined travel surface. Additionally, by receiving and evaluating the swing angle θ_{D} of the control handle in the plane perpendicular to the trolley's direction of travel, the trolley is controlled to perform a second preset operation, thereby governing its direction of travel. This method accurately controls the trolley's movement on various surfaces by acquiring and processing the angles between the trolley and the horizontal plane, and the control handle and the horizontal plane, to determine the angle between the control handle and the actual travel surface.

### BRIEF DESCRIPTION OF THE DRAWINGS

∘ clarify the technical solutions in the embodiments or the prior art, the drawings used in the description of the embodiments or the prior art will be briefly introduced. It is evident that the drawings in the following description are merely some embodiments of this disclosure. For those skilled in the art, other drawings can be obtained based on these drawings without creative work.

Figure 1: A logical flow diagram of an embodiment.
Figure 2: A schematic of the trolley on different types of travel surfaces in an embodiment.
Figure 3: A schematic of the control handle in different positions in an embodiment.
Figure 4: A schematic of the control handle in different positions in an embodiment.
Figure 5: A schematic of the overall structure of the trolley in an embodiment.

### Reference Number:

1: First gyroscope
2: Second gyroscope
3: Trolley body
4: Control handle.

### DETAILED DESCRIPTION

Unless defined otherwise, all technical and scientific terms used herein have the same meanings as commonly understood by those skilled in the art to which this disclosure pertains. The terms used in the description are for the purpose of describing specific embodiments and are not intended to limit this disclosure. The terms "comprise" and "have," and any variations thereof, in the description and claims of this disclosure, are intended to cover non-exclusive inclusions. The terms "first," "second," etc., in the description and claims of this disclosure are used to distinguish between different objects and are not intended to describe a specific sequence.

Mention of "embodiments" herein means that specific features, structures, or characteristics described in conjunction with the embodiments may be included in at least one embodiment of this disclosure. The appearance of this phrase in various places in the description does not necessarily refer to the same embodiment or an exclusive or alternative embodiment to other embodiments. Those skilled in the art implicitly and explicitly understand that the embodiments described herein can be combined with other embodiments.

In order to enable those skilled in the art to better understand the technical solutions of this disclosure, the technical solutions in the embodiments will be clearly and completely described below in conjunction with the drawings.

### Embodiment 1

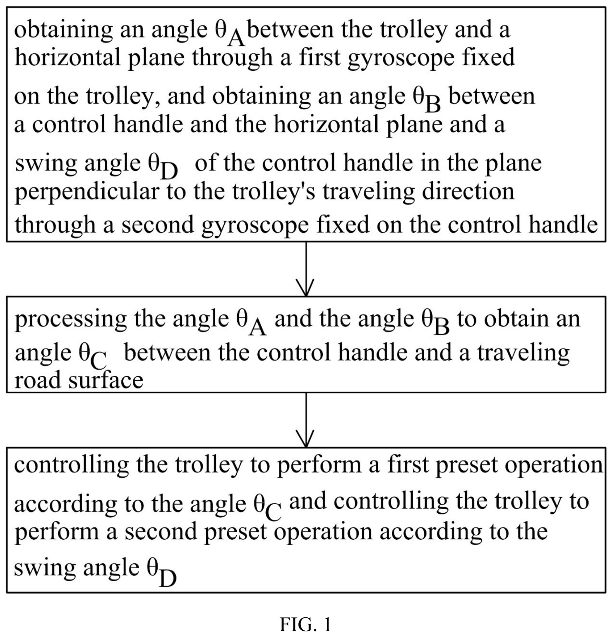

Referring to Figures 1-4, this embodiment discloses a gyroscope-based control method for trolleys, comprising:
acquiring the angle θ_{A} between the trolley and the horizontal plane using a first gyroscope fixed to the trolley, and obtaining the angle θ_{B} between the control handle and the horizontal plane, as well as the swing angle θ_{D} of the control handle in the plane perpendicular to the trolley's direction of travel, using a second gyroscope fixed to the control handle;
processing angles θ_{A} and θ_{B} to determine the angle θ_{C} between the control handle and the travel surface;
controlling the trolley to perform a first preset operation based on angle θ_{C} and a second preset operation based on swing angle θ_{D}.

For clarity, this embodiment involves a control center mounted on the trolley that receives and processes data and controls the trolley to perform the first and second preset operations based on different results. Additionally, an XYZ coordinate system is established around the trolley's center, with the forward and backward directions of the trolley defined as the X-axis, the left and right directions as the Y-axis, and the height direction as the Z-axis. The first gyroscope is mounted on the trolley body to measure the angle between the trolley and the horizontal plane, while the second gyroscope is mounted on the control handle to measure its angle relative to the horizontal plane. It should be noted that the end of the control handle is connected to the trolley via a spherical joint.

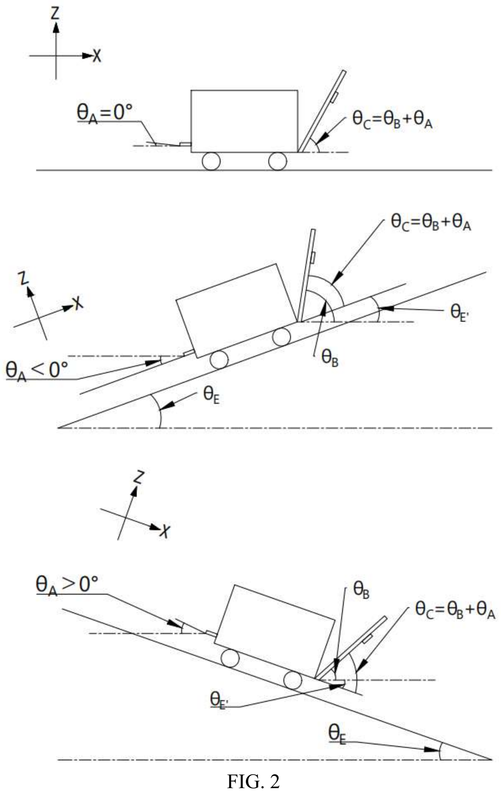

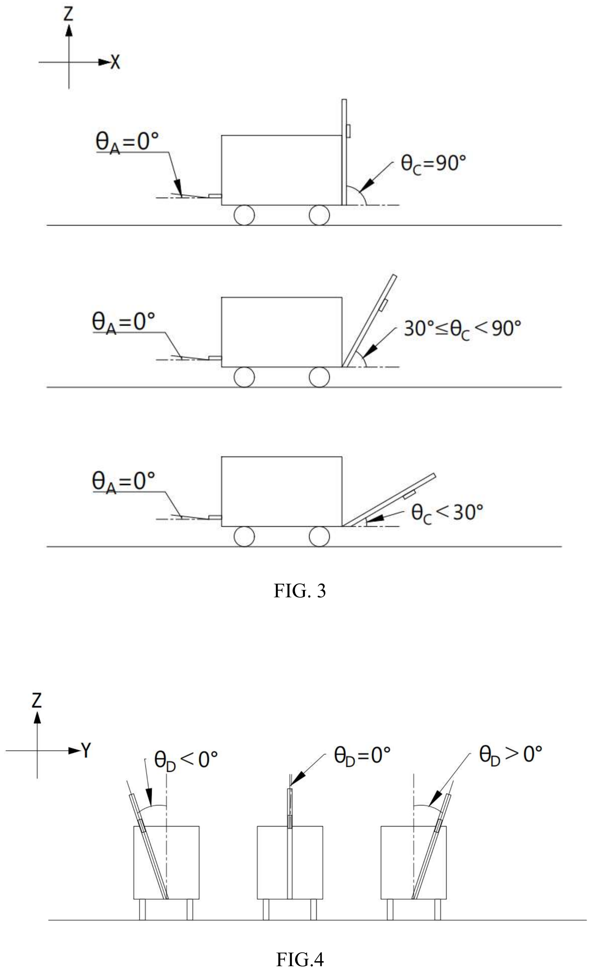

As shown in Figures 2 and 3, angle θA is the angle between the projection of the trolley on the XZ plane and the horizontal plane, and angle θ_{B} is the angle between the projection of the control handle on the XZ plane and the horizontal plane, with value ranges: -90° < θ_{A} < 90° and 0° ≤ θ_{B} ≤ 90°. As shown in Figure 4, swing angle θ_{D} is the projection angle of the control handle in the plane perpendicular to the trolley's direction of travel, i.e., the YZ plane in this embodiment, with a value range of -90° < θ_{D} < 90°.

Referring to Figure 2, angle θ_{C} is the sum of angles θ_{A} and θ_{B}, with a value range of 0° ≤ θ_{C} ≤ 90°. Specifically, when the trolley travels on a level surface, the angle detected by the first gyroscope between itself and the horizontal plane is equal to the angle between the trolley and the actual travel surface, i.e., θ_{A} = 0°. The angle θ_{C} between the control handle and the actual level travel surface is the sum of angles θ_{A} and θ_{B}. When the trolley travels on an inclined surface, if it is traveling uphill, the angle θ_{A} detected by the first gyroscope between itself and the horizontal plane is less than 0°, and the angle between the trolley and the horizontal plane is not equal to the angle between the trolley and the actual travel surface. From the drawings, it can be seen that when the trolley is on an uphill inclined surface, angle θ_{E'} is equal to angle θ_{E}, which is equal to angle θ_{A}. Therefore, angle θ_{C} is the sum of angles θ_{A} and θ_{B}. Similarly, when the trolley travels on a downhill inclined surface, angle θ_{C} is also the sum of angles θ_{A} and θ_{B}. In conclusion, regardless of whether the trolley travels on a level or inclined surface, the control center can always accurately acquire the angle between the control handle and the actual travel surface and control the trolley to perform the correct preset operation.

The control center performs different first preset operations based on the calculated value of angle θ_{C}. In this embodiment, the first preset operation comprises parking brake, travel operation, and braking operation. When the control center detects that angle θ_{C} equals 90°, it controls the trolley to engage the parking brake. When angle θ_{C} is greater than or equal to 30° and less than 90°, it controls the trolley to travel. When angle θ_{C} is less than 30°, it controls the trolley to brake. Specifically, when the trolley needs to be parked for loading or unloading, the user does not need to pull the trolley via the control handle. At this time, the control handle is in a position perpendicular to the travel surface, and the control center acquires angles θ_{A} and θ_{B} to determine that angle θ_{C} equals 90° and controls the trolley to engage the parking brake. When the trolley needs to be pulled for movement, the user only needs to adjust the control handle to a position where angle θ_{C} is greater than or equal to 30° and less than 90°. At this time, the control center detects the value of angle θ_{C} and controls the trolley to travel. When encountering special situations requiring temporary cessation of movement on the road, the user can adjust the control handle to a position where angle θ_{C} is less than 30°, and the control center detects the value of angle θ_{C} and controls the trolley to brake.

The control center performs different second preset operations based on the received value of swing angle θ_{D}. The second preset operation comprises maintaining straight travel, turning left, and turning right. When the control center detects that swing angle θ_{D} equals 0°, it controls the trolley to maintain straight travel. When swing angle θ_{D} is less than 0°, it controls the trolley to turn left. When swing angle θ_{D} is greater than 0°, it controls the trolley to turn right. Specifically, the user adjusts the swing angle θ_{D} of the control handle according to different usage needs. Under normal circumstances, the swing angle θ_{D} of the control handle equals 0°, and the trolley travels straight. When the trolley needs to travel to the left, the user only needs to adjust the control handle to the left of the trolley's forward direction, making the swing angle θ_{D} of the control handle less than 0°. At this time, the control center detects the value of swing angle θ_{D} and controls the trolley to turn left. Conversely, the trolley can be controlled to turn right.

In conclusion, this disclosure receives and processes the angles θ_{A} and θ_{B} between the trolley and the horizontal plane, and the control handle and the horizontal plane, respectively, to determine the angle θ_{C} between the control handle and the travel surface. Based on angle θ_{C}, the trolley is controlled to perform a first preset operation, enabling accurate control of the trolley's movement according to the control handle's position, regardless of whether the trolley is on a level or inclined travel surface. Additionally, by receiving and evaluating the swing angle θ_{D} of the control handle in the plane perpendicular to the trolley's direction of travel, the trolley is controlled to perform a second preset operation, thereby governing its direction of travel. This method accurately controls the trolley's movement on various surfaces by acquiring and processing the angles between the trolley and the horizontal plane, and the control handle and the horizontal plane, to determine the angle between the control handle and the actual travel surface.

### Embodiment 2

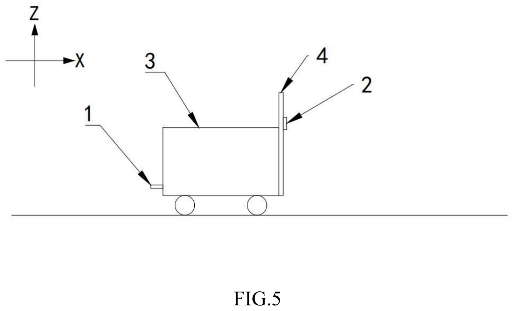

Referring to Figure 5, this embodiment discloses a traction-assisted trolley that applies the method of Embodiment 1, comprising:
a first gyroscope 1 configured to acquire the angle θ_{A} between the trolley and the horizontal plane;
a second gyroscope 2 configured to acquire the angle θ_{B} between the control handle and the horizontal plane, as well as the swing angle θ_{D} of the control handle in the plane perpendicular to the trolley's direction of travel; and
a control module configured to receive and process angles θ_{A} and θ_{B} to determine the angle θ_{C} between the control handle and the travel surface, and to control the trolley to perform a first preset operation based on angle θC and a second preset operation based on swing angle θ_{D}.

It should be noted that this embodiment also comprises a trolley body 3 and a control handle 4 rotatably connected to the trolley body 3, with the control module mounted on the trolley body 3. Additionally, the trolley is equipped with wheels for road contact, an engine set for driving the trolley to travel, brake, and engage the parking brake, and a steering mechanism for turning the trolley left, right, or straight. In actual use, the engine set receives and executes the first preset operation from the control module, and the steering mechanism receives and executes the second preset operation from the control module. The control module, engine set, and steering mechanism are not shown in the drawings of this embodiment.

Angle θ_{C} is the sum of angles θ_{A} and θ_{B}, with value ranges: -90° < θ_{A} < 90°, 0° ≤ θ_{B} ≤ 90°, and 0° ≤ θ_{C} ≤ 90°. Swing angle θ_{D} has a value range of -90° < θ_{D} < 90°.

Preferably, the first preset operation comprises parking brake, travel operation, and braking operation. When the control module detects that angle θ_{C} equals 90°, it controls the trolley to engage the parking brake. When angle θ_{C} is greater than or equal to 30° and less than 90°, it controls the trolley to travel. When angle θ_{C} is less than 30°, it controls the trolley to brake.

The second preset operation comprises maintaining straight travel, turning left, and turning right. When the control module detects that swing angle θ_{D} equals 0°, it controls the trolley to maintain straight travel. When swing angle θ_{D} is less than 0°, it controls the trolley to turn left. When swing angle θ_{D} is greater than 0°, it controls the trolley to turn right.

Additionally, in various embodiments of this application, the functional units can be integrated into one processing unit or exist separately as physical units, or two or more units can be integrated into one unit. If the functionality is implemented as a software functional unit and sold or used as an independent product, it can be stored in a computer-readable storage medium. Based on this understanding, the technical solutions of this application or portions thereof that contribute to the prior art can be embodied in the form of a software product stored in a storage medium, including instructions for causing a computer device (which can be a personal computer, server, or network device) to execute all or part of the steps of the methods described in the various embodiments of this application. The aforementioned storage medium comprises various media capable of storing program codes, such as a U disk, mobile hard disk, read-only memory (ROM), random access memory (RAM), magnetic disk, or optical disk.

Evidently, the embodiments described above are merely a part of the embodiments of this disclosure and not exhaustive. Based on the embodiments of this disclosure, other embodiments can be derived by those skilled in the art without creative work, and all such embodiments fall within the protection scope of this disclosure.

## Claims

1. A gyroscope-based control method for a trolley, comprising:
obtaining an angle θA between the trolley and a horizontal plane through a first gyroscope fixed on the trolley, and obtaining an angle θB between a control handle and the horizontal plane and a swing angle θD of the control handle in the plane perpendicular to the trolley's traveling direction through a second gyroscope fixed on the control handle;
processing the angle θA and the angle θB to obtain an angle θC between the control handle and a traveling road surface; and
controlling the trolley to perform a first preset operation according to the angle θC and
controlling the trolley to perform a second preset operation according to the swing angle θD.

2. The gyroscope-based control method for the trolley according to claim 1, wherein the angle θ C is equal to the sum of the angle θ A and the angle θ B, wherein the angle θ A has a value range of -90° < θ A < 90° , the angle θ B has a value range of 0° ≤ θ B ≤ 90° , and the angle θ C has a value range of 0° ≤ θ C ≤ 90° .

3. The gyroscope-based control method for the trolley according to claim 2, wherein the first preset operation comprises parking brake, traveling operation, and braking operation;
controlling the trolley to perform the parking brake when the angle θC is equal to 90°;
controlling the trolley to perform the traveling operation when the angle θC is greater than or equal to 30° and less than 90°; and
controlling the trolley to perform the braking operation when the angle θC is less than 30° .

4. The gyroscope-based control method for the trolley according to claim 1, wherein the swing angle θD has a value range of -90°< θD < 90°; the second preset operation comprises maintaining straight travel, turning left, and turning right;
controlling the trolley to maintain straight travel when the control module detects that the swing angle θD is equal to 0°;
controlling the trolley to turn left when the control module detects that the swing angle θD is less than 0° ; and
controlling the trolley to turn right when the control module detects that the swing angle θD is greater than 0°.

5. A traction-assisted trolley using the method according to any one of claims 1 to 4, comprising:
a first gyroscope, configured to obtain the angle θA between the trolley and the horizontal plane;
a second gyroscope, configured to obtain the angle θB between the control handle and the horizontal plane and the swing angle θD of the control handle in the plane perpendicular to the trolley's traveling direction;
a control module, configured to receive and process the angle θA and the angle θB to obtain the angle θC between the control handle and the traveling road surface; and to control the trolley to perform a first preset operation according to the angle θC and to control the trolley to perform a second preset operation according to the swing angle θD.

6. The traction-assisted trolley according to claim 5, wherein the angle θ C is equal to sum of the angle θ A and the angle θ B, wherein the angle θ A has a value range of -90° < θ A < 90° , the angle θ B has a value range of 0 ° ≤ θ B ≤ 90° , and the angle θ C has a value range of 0° ≤ θ C ≤ 90° .

7. The gyroscope-based control method for the trolley according to claim 6, wherein the first preset operation comprises parking brake, traveling operation, and braking operation;
controlling the trolley to perform the parking brake when the control module detects that the angle θC is equal to 90°;
controlling the trolley to perform the traveling operation when the control module detects that the angle θC is greater than or equal to 30° and less than 90°;
controlling the trolley to perform the braking operation when the control module detects that the angle θC is less than 30°.

8. The gyroscope-based control method for the trolley according to claim 5, wherein the swing angle θD has a value range of -90°< θD < 90°; the second preset operation comprises maintaining straight travel, turning left, and turning right;
controlling the trolley to maintain straight travel when the control module detects that the swing angle θD is equal to 0°;
controlling the trolley to turn left when the control module detects that the swing angle θD is less than 0°;
controlling the trolley to turn right when the control module detects that the swing angle θD is greater than 0°.

9. A mobile terminal, comprising a memory and a processor, wherein the memory stores a computer program, wherein the processor, when executing the computer program, implements the steps of the method according to any one of claims 1 to 4.

10. A computer storage medium, on which a computer program is stored, wherein a processor, when executing the computer program, implements the steps of the method according to any one of claims 1 to 4.
